# EUROPEAN PATENT APPLICATION

(11) **EP 1 223 587 A1**
(43) Date of publication of application: **17.07.2002**
(21) Application number: 02000145.9
(22) Date of filing: 07.01.2002
(51) Int. Cl.: G21C 3/07, C22C 16/00

(54) **Fuel cladding pipe made of Zr-Nb alloy for nuclear reactor**

(30) Priority: 09.01.2001 JP 2001001209; 09.01.2001 JP 2001001210; 21.03.2001 JP 2001079734
(71) Applicant: MITSUBISHI MATERIALS CORPORATION, Chiyoda-ku, Tokyo (JP)
(72) Inventor: Isobe, Takeshi, Mitsubishi Materials Corporation, 476, Shimoishidoshimo, Saitama-ken (JP); Murai, Takuya, Mitsubishi Materials Corporation, 476, Shimoishidoshimo, Saitama-ken (JP)
(74) Representative: HOFFMANN - EITLE

(57) **Abstract**

The present invention provides a fuel cladding pipe made of Zr alloy for nuclear reactor having a high degree of strength and possessing superior resistance to corrosion. The fuel cladding pipe of the present invention is formed of a Zr alloy containing Nb in the range of 1.35∼2.15% by weight, with the remainder comprising Zr and inevitable impurities, or is formed of a Zr alloy containing Nb in the range of 0.4∼2.15% and Cr in the range of 0.01∼0.7%, with the remainder comprising Zr and inevitable impurities.

## Description

### BACKGROUND OF THE INVENTION

### 1. Field of the Invention

The present invention relates to a fuel cladding pipe made of Zr alloy for nuclear reactor (hereinafter called "Zr alloy fuel cladding pipe") having a high degree of strength and superior resistance to corrosion by high-temperature, high-pressure water or high-temperature, high-pressure water solutions containing lithium hydroxide (hereinafter called LiOH). As a result, this Zr alloy fuel cladding pipe not only can be made to have a smaller diameter and thickness, but is also capable of superior performance over a long period of time.

### 2. Background Art

In general, fuel cladding pipes provided in light-water and other such nuclear reactors function to transmit the heat generated by fuel made of radioactive material housed in the reactor to high-temperature, high-pressure water or a high-temperature, high-pressure water solution typically containing several ppm of LiOH, which serves as cooling water that flows over the outer circumference of the fuel cladding pipe. This fuel cladding pipe is usually made of Zr alloy such as zircaloy.

On the other hand, in response to the higher performance of nuclear reactors in recent years, there has been a demand to reduce the thickness and diameter of the fuel cladding pipe while also further improving resistance to corrosion by the cooling water. However, the present condition is that fuel cladding pipes made of zircaloy or the other various Zr alloys conventionally proposed lack sufficient strength and resistance to corrosion to satisfy these demands.

### SUMMARY OF THE INVENTION

In compliance with the above-described circumstances, the present inventors first carried out research directed at developing a Zr alloy fuel cladding pipe possessing a high degree of strength. These efforts yielded a Zr alloy with a composition containing as a weight percentage (the symbol "%" as used hereinafter indicates percent based on weight)
Nb: 1.35~2.15%
with the remainder consisting of Zr and inevitable impurities. This Zr alloy had a high degree of strength as compared to zircaloy widely used in the conventional fuel cladding pipe, and demonstrated superior resistance to corrosion by high-temperature, high-pressure water. Accordingly, by employing this Zr alloy, it is possible to reduce the diameter and thickness of the fuel cladding pipe.

The present invention was developed based on results of the above-described research, and has as its objective the provision of a Zr alloy fuel cladding pipe with a high degree of strength which is composed of a Zr alloy containing Nb in the range of 1.35~2.15%, with the remainder consisting of Zr and inevitable impurities.

Note that the reason for including Nb in the range of 1.35-2.15% in the Zr alloy forming the fuel cladding pipe of the present invention is as follows. Namely, when the amount of Nb is less than 1.35%, the improvement in strength derived from the Nb component is not sufficient, so that it is not possible to ensure the desired amount of strength. On the other hand, when the amount of Nb exceeds 2.15%, cold and hot workability when forming the pipe deteriorates, making it difficult to reduce the diameter and thickness of the pipe as desired.

Again taking into consideration the above-described circumstances, the present inventors also carried out research aimed at developing a Zr alloy fuel cladding pipe with a high degree of strength and superior resistance to corrosion. The results of these efforts yielded a Zr alloy having a composition containing
Nb: 0.4~2.15%
Cr: 0.01~0.7%
with the remainder comprising Zr and inevitable impurities. This Zr alloy had a high degree of strength as compared to zircaloy widely used in the conventional fuel cladding pipe, and had superior resistance to corrosion by high-temperature, high-pressure water or high-temperature, high-pressure water solutions containing LiOH. Accordingly, by employing this Zr alloy, it is possible to reduce the diameter and thickness of the fuel cladding pipe, and enable an even longer effective life.

The present invention is based on the results of the research described above, and proposes a Zr alloy fuel cladding pipe having a composition containing
Nb: 0.4~2.15%
Cr: 0.01~0.7%
with the remainder comprising Zr and inevitable impurities. This Zr alloy fuel cladding pipe having a high degree of strength and possessing superior resistance to corrosion.

Note that the reason for including Nb in the range of 0.4~2.15% in the Zr alloy comprising the fuel cladding pipe of the present invention is as follows. Namely, when the amount of Nb is less than 0.4% the improvement in strength and corrosion resistance derived from the Nb component is not sufficient, so that it is not possible to ensure the desired amount of strength and superior resistance to corrosion. On the other hand, when the amount of Nb exceeds 2.15%, then, as described above, hot and cold workability when forming the pipe deteriorates, making it difficult to reduce the diameter and thickness of the pipe as desired.

In addition, the reason for including Cr in the range of 0.01~0.7% is as follows. Namely, when the amount included is less than 0.01%, the effect of improved resistance to corrosion which results from the presence of the Cr and Nb components together is not sufficient. On the other hand, as in the case of the Nb component, hot and cold workability deteriorates when the amount of Cr exceeds 0.7%.

### DESCRIPTION OF THE PREFERRED EMBODIMENTS

Preferred embodiments of the fuel cladding pipe according to the present invention will now be explained using specific examples.

### Example 1

A Zr alloy having the component composition shown in Table 1 was melted in a vacuum arc furnace, after which an ingot was cast having a diameter of 350 mm. Heat forging of this ingot was performed to obtain a bar having a diameter of 220 mm. Next, a solution heat treatment was carried out by heating this bar to 1050°C and then subjecting it to water cooling. With the resultant material heated to 750°C, a heat extruding process was performed to obtain a pipe-shaped bar having an outer diameter of 80 mm and an inner diameter of 50 mm. Next, this pipe-shaped bar was subjected to cold rolling six times while applying intermediate annealing at 600°C. In this manner, cladding pipes 1~5 according to the present invention and cladding pipes 1 and 2 according to the conventional art having an outer diameter of 8 mm and an inner diameter of 7 mm were obtained.

Note that a conventionally known Zr alloy having a composition corresponding to two types of zircaloy was employed for the material of conventional cladding pipes 1 and 2.

Tensile strength was measured for the present invention's cladding pipes 1~5 and conventional cladding pipes 1 and 2 with the objective of evaluating the strength of the pipes. Furthermore, in order to evaluate the resistance of the pipes to corrosion, corrosion tests were carried out under conditions corresponding to the corrosive environment that the cladding pipe would experience in a light water reactor. In the corrosion tests, test pieces cut into 50 mm lengths were placed in a static autoclave and corroded for 150 days in high-temperature, high-pressure water consisting of saturated aqueous vapor at 360°C for which deionized water (electric conductivity: 0.1 µSv or less) were employed. The increase in weight due to generation of an oxide film was then measured.

These results are shown in Table 1. Note that the amount of increase in corrosion is indicated as a mass increase per unit area.

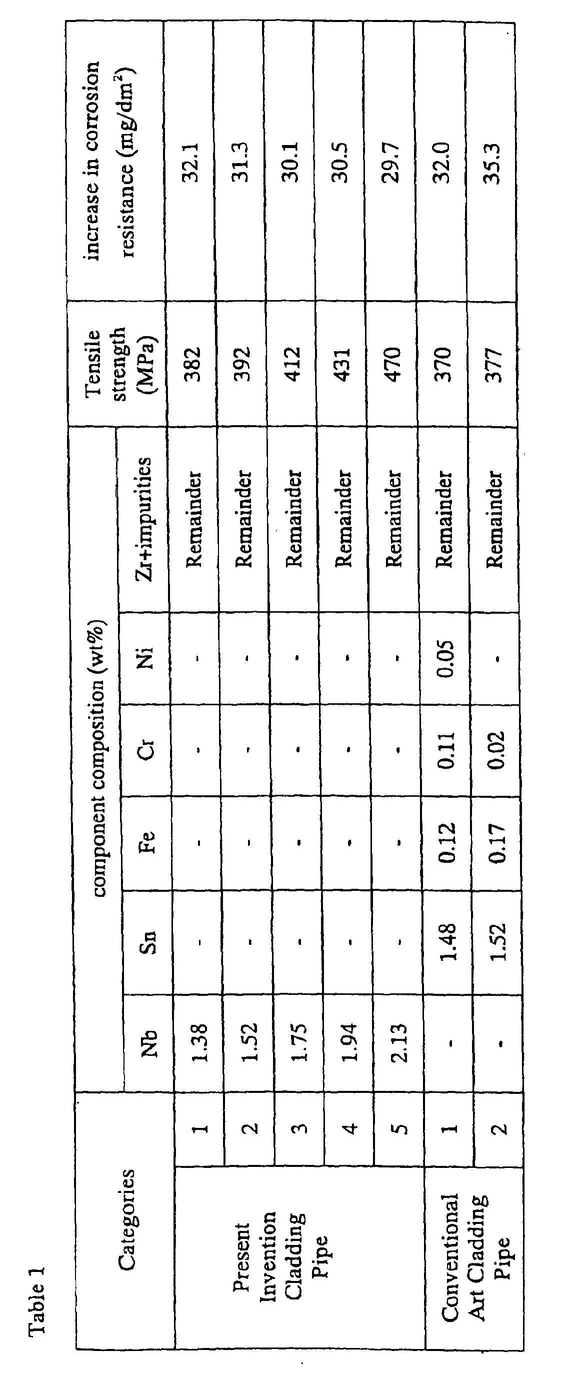

As may be understood from the results in Table 1, all of the present invention's cladding pipes 1~5 have a high degree of strength as compared to conventional cladding pipes 1 and 2 and demonstrated an equivalent resistance to corrosion.

As discussed above, because the fuel cladding pipe according to this embodiment has a high degree of strength, it is possible to sufficiently meet the demand to reduce the diameter and thickness of the pipe in response to the high performance of nuclear reactors.

### Example 2

Cladding pipes 6~16 according to the present invention and cladding pipes 3 and 4 according to the conventional art having the component composition shown in Table 2 were made using the same method as employed in Example 1.

Note that a Zr alloy having a composition corresponding to two types of conventionally known zircaloy was employed for the material of the conventional cladding pipes 3 and 4.

Tensile strength was measured for the present invention's cladding pipes 6~16 and conventional cladding pipes 3 and 4 with the objective of evaluating the strength of the pipes. Furthermore, in order to evaluate the resistance of the pipes to corrosion, corrosion tests were carried out using the same method as in Example 1. In addition, accelerated corrosion tests were also carried out in which test pieces cut into 50 mm lengths were placed in a static autoclave and corroded for 90 days in a high-temperature, high-pressure water solution consisting of saturated steam at 360°C, this water solution containing LiOH in an amount of 0.01 mol/liter and being formulated using deionized water (electric conductivity: 0.1 µSv or less) and LiOH guaranteed reagent. The increase in mass due to generation of an oxide film was then measured.

These results are shown in Table 2. Note that the amount of increase in corrosion is indicated as a mass increase per unit area.

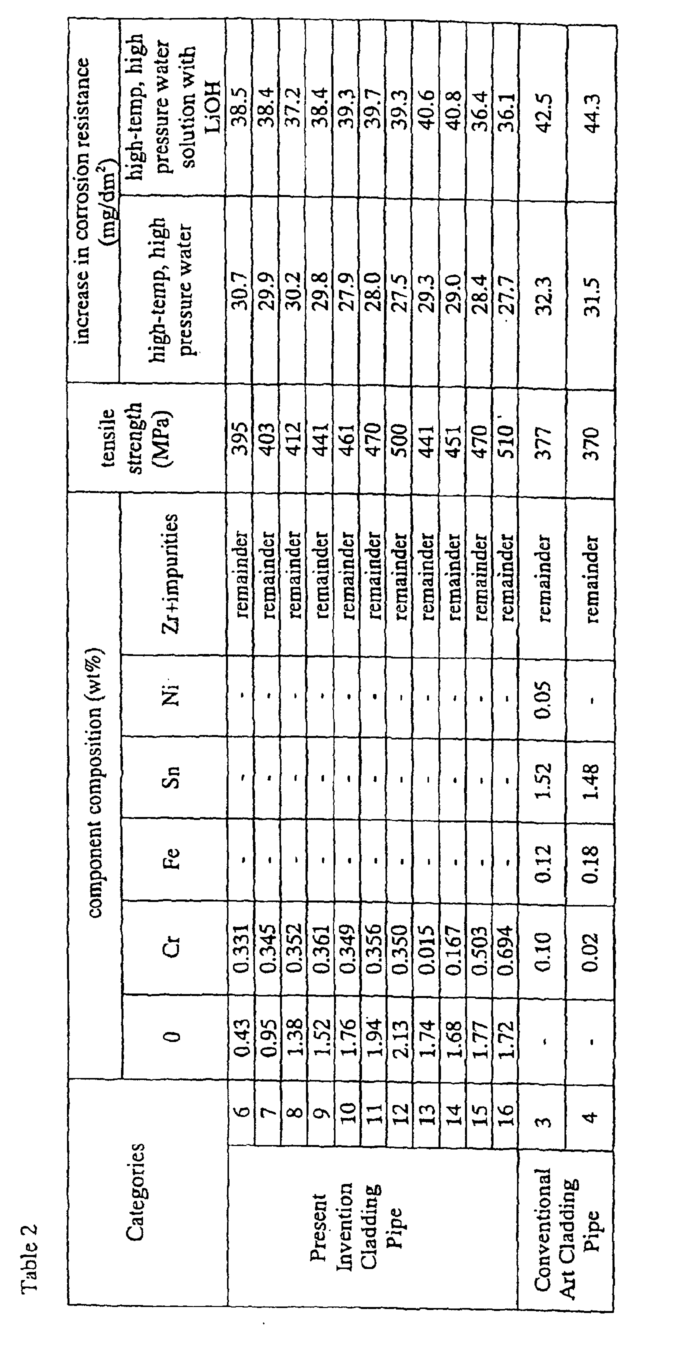

As may be understood from the results in Table 2, all of the present invention's cladding pipes 6~16 have a high degree of strength as compared to conventional cladding pipes 3 and 4 and demonstrated superior resistance to corrosion by high-temperature, high-pressure water or high-temperature, high-pressure water containing LiOH.

As discussed above, because the fuel cladding pipe according to this embodiment has a high degree of strength, it is possible to sufficiently meet the demand to reduce the diameter and thickness of the pipe in response to the high performance of nuclear reactors. Moreover, because of the superior resistance to corrosion, an even longer effective life becomes possible.

## Claims

1. A fuel cladding pipe made of Zr alloy for nuclear reactor composed of a Zr alloy containing as a percent by weight
Nb: 1.35∼2.15%
and a composition in which the remainder is comprised of Zr and inevitable impurities.

2. A fuel cladding pipe made of Zr alloy for nuclear reactor composed of a Zr alloy containing as a percent by weight
Nb: 0.4~2.15%
Cr: 0.01~0.7%
and a composition in which the remainder is comprised of Zr and inevitable impurities.
